# EUROPEAN PATENT SPECIFICATION

(11) **EP 1 520 675 B1**
(45) Date of publication and mention of the grant of the patent: **19.09.2007**
(21) Application number: 03076318.9
(22) Date of filing: 02.05.2003
(51) Int. Cl.: B29C 44/32, B29C 44/34

(54) **A procedure for the manufacture of foam insulated pipes**
Verfahren zur Herstellung von schaumisolierten Rohren
Procédé de fabrication de tuyaux isolés par de la mousse

(43) Date of publication of application: 06.04.2005
(73) Proprietor: ALSTOM Power FlowSystems A/S, 7000 Fredericia (DK)
(72) Inventor: Nielsen, Lars Valentin, 7000 Fredericia (DK)
(74) Representative: Brock-Nannestad, George

(56) References cited:
- WO-A-92/02353
- DE-A- 3 216 463
- FR-A- 2 321 383
- FR-A- 2 578 026
- GB-A- 965 185
- GB-A- 1 277 865
- GB-A- 2 136 528

## Description

The invention relates to a procedure for the manufacture of foam insulated pipes of the type comprising an inner pressure pipe, a foam layer, at least one layer of foil containing aluminium, held in tubular shape, and a plastic casing extruded around it.

Such foam insulated pipes are manufactured in large quantities for district heating, and their good insulating properties are to a large extent due to the gas that is present in the small cells of the foam and which has been used for the foaming operation. Due to diffusion, during the passage of time an exchange of this gas occurs with atmospheric air, which has a considerably lower insulating ability, or under adverse circumstances there may occur a presence of water vapour. This exchange occurs over years, but this is still short relative to the lifetime expected for a district heating installation.

Constructions are known, which have an integrated diffusion barrier in a foam-insulated pipe of this type, e.g. described in EP 84 088, DE 33 07 865, and EP 0 960 723. The diffusion barrier consists of aluminium laminated with plastic. DE 3307865 discloses the preamble of claim 1.

In known constructions the manufacture occurs continuously, in that the inner pressure pipe is brought forward through a number of stations, where application of the various layers occurs. It is intended that there shall be a good adhesion between pressure pipe and foam, between the foam and the diffusion barrier, and between the diffusion barrier and the outer abrasion-protective casing. In practice, the foaming occurs continuously by the supply of raw materials from a mixing station (e.g. isocyanate/polyol and accelerator), in order that the foaming occurs between the pressure pipe and the diffusion resistant membrane that is held in a tubular shape with an overlap. In the present procedure the diffusion barrier is provided in the form of a strip that has a width corresponding to the circumference of the inside of the outer casing with additional material for overlapping, and it is frequently shaped axially. This consists of aluminium foil that has been laminated with plastic on at least one side. After the foaming the foam-filled tubular sheath is brought through a station for extruding the outer casing around it. It is essential for the mechanical strength and durability of the construction over time that the adhesion between the diffusion barrier and the casing is good, in practice a welding is desired. The above mentioned EP 0 960 723 describes, how the reaction heat generated by the foaming process contributes so much heat to the diffusion barrier that such a welding is obtained. However this puts very important limitations to the gauges that may be used for the layers used in the diffusion barrier, due to their heat capacity, and it has been difficult in practice to control the process.

According to the invention a solution has been found to this problem, which is suitable for continuous production, in that a local, ring-shaped heating is provided by means of an external energy source, with an axial location with respect to the foaming that welding is assured. The axial position of the energy source is determined by the skilled person as a function of the thermal properties of the freshly foamed insulating material and the placement of the extrusion head for the casing extruded around it. The term external energy source refers in particular to the element that in practice transfers energy and to a lesser degree to the unit that e.g. converts the supplied energy to a suitable frequency range.

In a preferred embodiment the heating is performed by means of an external induction heating coil, and the energy supply to the induction heating coil is selected such that the heat generated in the aluminium layer welds the outer layer of the metal laminate to the inside of the casing. During the passage through the induction coil the metal foil will be so strongly heated that a continuous welding occurs between the outer foil of the metal laminate and the inside of the casing. Such an induction coil may advantageously be located following a station for extrusion of the casing, and where the foaming of the insulating material has not yet ceased.

A further embodiment is particular in that the the extrusion of the plastic casing occurs immediately subsequent to the forming of the diffusion barrier, that a hollow support mandrel fitted at a suitable axial distance from the ring-shaped slit presses the diffusion barrier against the inside of the obtained plastic casing, that elements for ring-shaped heating of the diffusion barrier are activated in the support mandrel, whereby the support mandrel additionally has means for the supply of components for foam generation. With a view to ensuring stability of form it is expedient to see to it that the plastic casing has cooled sufficiently; alternatively an outer support ring located coaxially with the support mandrel and at the same axial location may act as a holder-on for the radial pressure of the support mandrel.

In further advantageous embodiments of the invention cooling means are provided for the mandrel that carries the energy transmitting element, because the mandrel is it self heated by touching the parts of the diffusion barrier that are heated. A gaseous cooling fluid may be brought to the surface, and a liquid cooling fluid may circulate through the mandrel and its carrying rod.

The invention will be described in greater detail in the following with reference to the drawing, in which
Fig. 1 schematically shows a plant for the continuous manufacture of insulated pipes,
Fig. 2 schematically shows the placement of the various central components according to an embodiment of the invention, and
Fig. 3 schematically shows the placement of the various components according to a different embodiment of the invention.

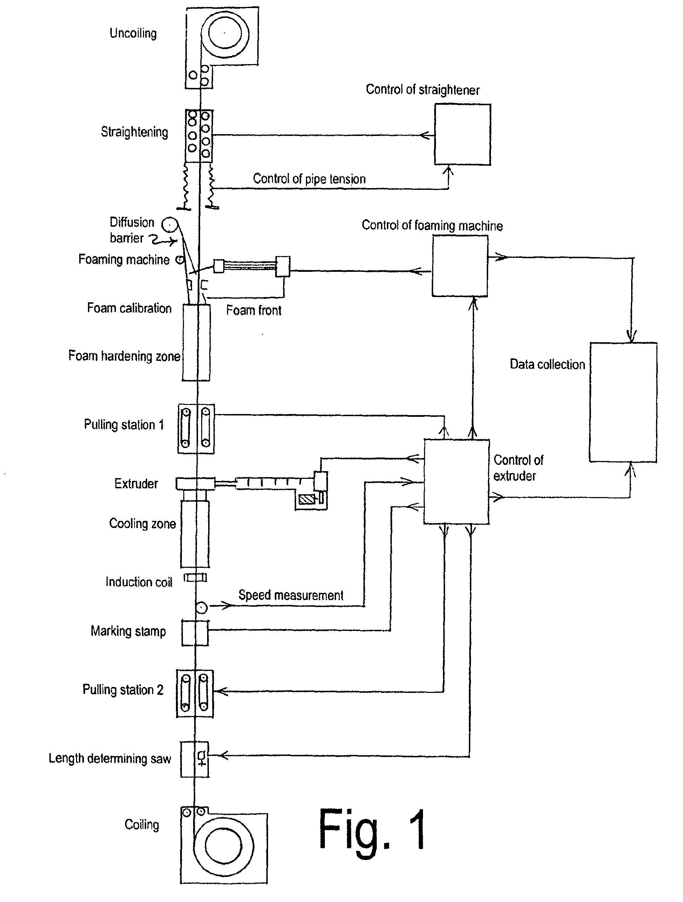

In Fig. 1 is seen an industrial plant which is essentially intended for continuous production, apart from the fact that pressure pipes are brought to the plant at one end, and are welded end-to-end to unlimited length, and that a diffusion barrier in the form of a foil material is brought on rolls which have to be renewed, and that plastic granules have to be provided for use for the outer casing. At the other end the finished insulated pressure pipes must be wound on storage devices with a limited length, which means that the unbroken pipe must be cut when a storage device is full. The foil material is a ready-made laminate consisting of a layer 2 in polyethylene with a melting point that is suitable for welding to the outer casing, a layer 3, which is a layer of aluminium that constitutes the actual diffusion barrier, and an internal layer 4 which may be thermo-setting, such as polyester, or thermoplastic, but with a melting point that is higher than the melting point for the layer 2. It is furthermore shown where one form for heat source for the welding, i.e. an induction coil, may be placed.

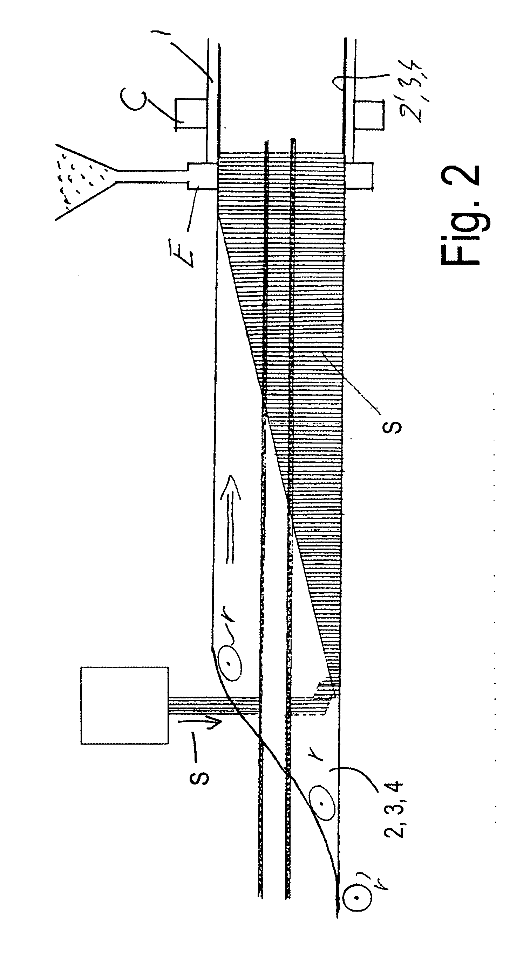

The foaming commences immediately upon the mixing of the components and is finished when the foam has hardened. In Fig. 2 it is schematically shown how a sloping foam front is created, because the foam is at a low level initially and expands and fills the space between the surrounding foil and the inner pressure pipe. The foam S is supplied in a controlled manner through a supply line immediately before the overlapping between the two sides of the foil strip 2, 3, 4 takes place. This overlapping is created by the guide rollers r which are shown schematically. At a location where the foam fills up the pipe cross section completely and after obtaining a suitable hardening of the foam, the insulated pressure pipe supplied with a diffusion barrier passes a station E for extrusion of an outer casing. After passing a cooling zone for the casing the pipe is brought through an induction coil C that induces eddy currents in the metal layer in the diffusion barrier, whereby this in a ring-shape heats and melts the outer layer as well as the internal surface of the casing. Thereby these will weld to the diffusion barrier 2', 3,4, as they are already pressed against each other by the expanding foam. It will be obvious that other non-touching methods of energy transfer may be used for the ring-shaped local heating. The axial distances in this figure are very distorted because of the principles depicted.

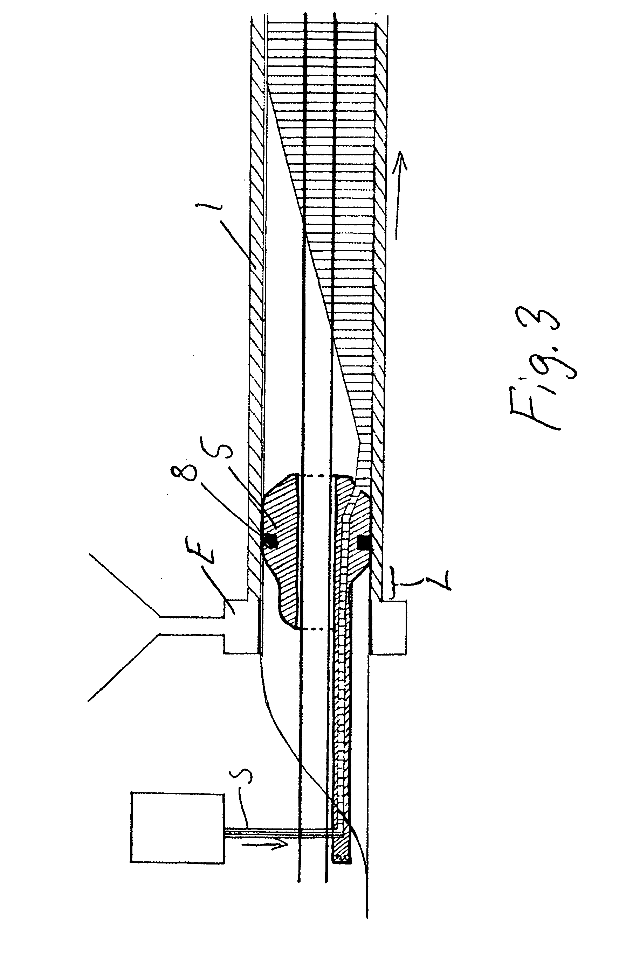

In Fig. 3 it is shown how a different embodiment of the idea of the invention uses the same fundamental components but in a different order. The diffusion barrier is formed in the same way as above, but the foam is not supplied until a welding has been obtained between the diffusion barrier and the casing. This occurs in that the surrounding extrusion E of the diffusion barrier is performed immediately subsequent to the creation of the overlap of the diffusion barrier. In order to preserve the stability of shape for the casing and the diffusion barrier there is placed around the pressure pipe a hollow mandrel 5 that has an outer diameter that corresponds closely to the desired inner diameter of the diffusion barrier. The pressure pipe is brought through the hollow mandrel. The mandrel 5 is provided with a ring-shaped heating zone 8 that heats and melts the outer layer 2 and inner surface of the casing 1 in a ring-shape, whereby these weld to each other. The mandrel is furthermore provided with one or several channels for carrying foam S which is provided with a view to fill up and harden in the casing now available with a diffusion barrier The mandrel is mounted on a long rod that has channels for foam, supplied from a mixer for the constituent raw materials (e.g. isocyanate/polyole as well as an accelerator), and which additionally has supply lines for the energy supply to the ring-shaped heating zone. In cases where a cooling of the casing is required due to the amounts of material involved, the distance between the extruder and the mandrel will be long, and the rod will in that case be correspondingly longer. The mandrel is provided with a surface, which does not have a tendency to stick to the inside of the diffusion barrier, even though it is heated locally and ring-shaped from the inside. Such a surface may be obtained, either by means of a coat in e.g. a polytetrafluorethylene polymer or by a suitable combination of a coat of this kind and a suitable texturing of the surface. Furthermore there may be provided means in the rod for the transport of a gas under pressure for injection and cooling of the surface of the mandrel at or outside the ring-shaped area. There may hence be provided channels and/or orifices for this in the surface of the mandrel. In case a liquid coolant is used, the channels will not have orifices to the surface, and there is a requirement for channels for the return of heated coolant.

## Claims

1. A process for the manufacture of foam insulated pipes of the type comprising an inner pressure pipe, a foam coat (S), a diffusion barrier (2, 3, 4) constituted of at least one foil layer (3) containing aluminium, which is held in a tubular shape and a plastic casing (1) extruded around it, comprising supplying the inner pressure pipe, supplying the diffusion barrier for shaping into a cylinder, extrusion of a plastic casing by means of ring-shaped slit (E), supply of components for foam creation by foaming, **characterised in that** a local, ring-shaped heating is performed on the diffusion barrier (2, 3, 4) by means of an external energy source (C), placed axially in relation to the foaming (S) such that a welding is assured.

2. A process according to claim 1, **characterised in that** the heating is performed by means of an external induction heating coil (C), and the energy supply to the induction heating coil is selected such that the heat generated in the aluminium layer (3) welds the outer layer of the metal laminate to the inside of the casing (1).

3. A process according to claim 1, **characterised in that** the extrusion of the plastic casing occurs immediately subsequent to the forming of the diffusion barrier, that a hollow support mandrel (5) fitted at a suitable axial distance from the ring-shaped slit (E) presses the diffusion barrier against the inside of the obtained plastic casing (1), that elements (8) for ring-shaped heating of the diffusion barrier are provided in the support mandrel (5), whereby the support mandrel additionally has means for the supply of components for foam generation.

4. A process according to claim 3, **characterised in that** the hollow support mandrel (5) is supplied with a coolant through the carrier rod of the support mandrel, **in that** the coolant is supplied through channels to the surface of the support mandrel for cooling those parts that are in contact with the elements (8) for ring-shaped heating of the diffusion barrier (2, 3, 4).

5. A process according to claim 4, **characterised in that** the coolant is returned through suitable channels in the carrier rod of the support mandrel (5).

## Patentansprüche

1. Verfahren zur Herstellung von schaumisolierten Rohren eines Typs, das ein inneres Druckrohr, eine Schaumschicht (S), eine Diffusionssperre (2, 3, 4), aus wenigstens einer Folienschicht (3), Aluminium enthaltend und in Rohrenform gehalten, und ein umextrudiertes Aussenplastikrohr (1) umfasst, umfassend die Zufuhr des inneren Druckrohrs, Zufuhr der Diffusionssperre um zylindrisch geformt zu werden, Extrudierung eines Aussenplastikrohrs mittels eines ringformigen Schlitzes (E), Versorgung von Komponenten zu Schaumerzeugung durch Aufschäumen, **dadurch gekennzeichnet, dass** eine lokale, ringformige Erwärmung durchgeführt wird von der Diffusionssperre (2, 3, 4) mittels einer eksternen Energiequelle (C), die auf solcher weise axial in Verhältnis zu der Schaumbildung angebracht, dass eine Verschweissung gesichert wird.

2. Ein Verfahren nach Anspruch 1, **dadurch gekennzeichnet, dass** die Erwärmung mittels einer externen Induktionsheizspule (C) durchgeführt wird, und dass die Energieversorgung zu der Induktionsheizspule so gewählt wird, dass die in der Aluminiumschicht (3) erzeugte Wärme die äussere Schicht des Metallaminats an der Innenseite des Aussenplastikrohrs (1) verschweisst.

3. Ein Verfahren nach Anspruch 1, **dadurch gekennzeichnet, dass** die Extrudierung des Aussenplastikrohrs unmittelbar nach der Bildung der Diffusionssperre statt findet, dass eine an passendem axialen Abstand von der ringformigen Schlitz (E) installierte hohle Stutzstange (5) die Diffusisonssprerre gegen der Innenseite des erhaltenen Aussenplastikrohrs (1) presst, dass Elemente (8) zu ringförmiger Erwärmung der Diffusionssperre in der Stutzstange (5) vorgesehen sind, wobei die Stutzstange weiter Mittel für die Zufuhr von Schaumbildungskomponenten hat.

4. Ein Verfahren nach Anspruch 3, **dadurch gekennzeichnet, dass** die hohle Stutzstange (5) durch die Tragstange der Stutzstange mit Kühlmittel versorgt ist, **dadurch**, dass das Kühlmittel durch Kanäle zu der Oberfläche der Stutzstange gebracht wird um diejenigen Teilen, die in Kontakt mit den Elementen (8) für ringförmige Erwärmung der Diffusionssperre (2, 3, 4) sind, zu kühlen.

5. Ein Verfahren nach Anspruch 4, **dadurch gekennzeichnet, dass** der Rücklauf des Kühlmittels durch passende Kanäle in der Tragstange für die Stutzstange (5) erfolgt.

## Revendications

1. Procédé de fabrication de tuyaux isolés par de la mousse du type comprenant un tuyau interne de pression, une couche de mousse (S), une barrière anti-diffusion (2, 3, 4) comprenant au moins une couche de feuille (3) contenant de l'aluminium, tenu dans une forme tubulaire et une enveloppe en plastique (1) extrudé autour dudit barrière, comprenant fournissage du tuyau interne de pression, fournissage de barrière anti-diffusion pour être formé en forme cylindrique, extrusion d'une enveloppe en plastique par une fente annulaire (E), fournissage des composants pour creér de la mousse par moussage, **caracterisé en ce qu'**une chauffage locale et annulaire est effectue sur la barrière anti-diffusion (2, 3, 4) par une source externe d'énergie (C) placé axialement relative au (S) telle qu'une soudage est assuré.

2. Procédé selon la revendication 1, **caracterisé en ce que** le chauffage est effectué par une bobine de chauffage a induction externe (C) et l'énergie fournit a la bobine de chauffage a induction est selectionné telle que le chaleur developpé dans la couche d'alumimium (3) soude le couche extérieur du laminé metallique au coté intérieur de l'enveloppe (1).

3. Procédé selon la revendication 1, **caracterisé en ce que** l'extrusion de l'enveloppe en plastique se déroule immediatement depuis la création de la barrière anti-diffusion, qu'un mandrin de support creux (5) monté a une distance axiale convenable de la fente annulaire (E) presse la barrière anti-diffusion contre la côté interieure de l'enveloppe en plastique (1) obtenu, que des élements (8) pour chauffage annulaire de la barrière sont pourvu dans le mandrin de support (5), le mandrin de support comprenant en plus des moins pour le fournissage des composants de création de mousse.

4. Procédé selon la revendication 3, **caracterisé en ce que** le mandrin de support creux (5) est fournis d'une fluide de refroidissage a travers la tige porteur du mandrin de support, **en ce que** la fluide de refroidissage est fourni par des conduits a la surface du mandrin de support pour refroidir les parties qui sont en contact avec les élements (8) de chauffage annulaire de la barrière anti-diffusion (2, 3, 4).

5. Procedé selon la revendication 4, **caracterisé en ce que** le retour du refroidissant à lieu par des conduits convenables dans la tige porteur du mandrin de support (5).
